# EUROPEAN PATENT SPECIFICATION

(11) **EP 3 413 253 B1**
(45) Date of publication and mention of the grant of the patent: **24.07.2024**
(21) Application number: 16889019.2
(22) Date of filing: 29.07.2016
(51) Int. Cl.: H04L 9/08, G07F 7/10, G06Q 20/40, G06Q 20/38, H04L 9/32, H04L 9/40

(54) **BANKCARD PASSWORD PROTECTION METHOD AND SYSTEM**
PASSWORTSCHUTZVERFAHREN UND SYSTEM FÜR BANKKARTE
PROCÉDÉ ET SYSTÈME DE PROTECTION PAR MOT DE PASSE DE CARTE BANCAIRE

(30) Priority: 04.02.2016 CN 201610080215
(43) Date of publication of application: 12.12.2018
(73) Proprietor: Ingenico (Fujian) Technology Co., Ltd., Fujian 350001 (CN)
(72) Inventor: PENG, Botao, Fuzhou Fujian 350000 (CN); YAN, Jianming, Fuzhou Fujian 350000 (CN); HU, Daisong, Fuzhou Fujian 350000 (CN)
(74) Representative: LLR
(86) International application number: PCT/CN2016/092332
(87) International publication number: WO 2017/133204

(56) References cited:
- EP-A1- 2 775 421
- CN-A- 101 340 294
- CN-A- 102 624 710
- CN-A- 102 624 711
- CN-A- 103 684 768
- CN-A- 103 996 011
- CN-A- 105 761 066
- CN-U- 203 057 229
- US-A1- 2010 131 764
- US-A1- 2010 145 854
- US-A1- 2011 066 512
- US-A1- 2012 143 770
- US-A1- 2014 164 254
- US-A1- 2014 289 129

## Description

### Technical Field

The invention relates to the technical field of data transmission, in particular to a bankcard password protection method and system.

### Description of Related Art

With the continuous development of the Internet and electronic payment techniques, traditional financial POS devices have been greatly changed and closely combined with the Internet day-by-day in the aspects of appearance design, function expansion, interface enrichment, user experiment improvement and the like, and various new techniques have sprung up, such as the new technique of bankcard password input based on a touch screen.

When bankcard passwords are input into the traditional POS devices, a special physical numeric keypad is needed. Along with the requirement for smaller and smaller POS devices, a great bottleneck confronts POS devices in structural design and appearance design due to the large space occupation of the physical keypad, and the traditional POS devices always seem rigid and unfashionable. With the development of the Internet technology and the rise of mobile payment, the technique of realizing bankcard password input on mobile phones has been widely used and is being understood and accepted by customers day by day. Following the popularization of smart POS devices, touch screen-based bankcard password input is becoming a tide and an inevitable technology development trend.

However, as professional commercial payment devices, POS machines are different from personal payment devices such as mobile phones which are generally used by individuals or limited persons. Due to the fact that any customers may swipe cards and input bankcard passwords to the POS machines serving as commercial payment devices, the benefits of cardholders will be threatened once the POS machines are illegally transformed. Thus, the requirement for the security protection level of bankcard password input of the professional commercial POS devices is much higher than that of personal devices such as mobile phones, and the security protection technique for bankcard password input of POS devices based on touch screens is of great importance.

In the prior art, a POS terminal comprises an application processor (short for AP) and a security processor (short for SE). As a universal application processor, the AP does not have a physical intrusion detection and response mechanism or a hardware storage area conforming to the specifications of the financial POS industry to store sensitive data, such as transaction keys, used for transaction verification with the bank background. As a professional security processor, the SE has a physical intrusion detection and response mechanism and is internally provided with a hardware-protected security storage area for storing sensitive data such as keys, and all the sensitive data in the security storage area will be automatically destroyed when the POS machines suffer from various physical attacks such as illegal disassembly, making sure that these information has been automatically lost and cannot be accessed under the condition that the POS machines are internally attacked. PIN (namely bankcard password) information needs to be encrypted in the POS machines first and then is sent to the POS background to complete verification; however, due to the facts that the AP cannot store keys and only the SE can store keys, after acquiring bankcard passwords input by customers, the AP has to transmit the bankcard passwords to the SE, the SE encrypts the bankcard passwords by means of the keys and then transmits the encrypted bankcard passwords back to the AP, and afterwards, the AP transmits the bankcard passwords to the bank background for transaction verification. However, in the transmission process from the AP to the SE, plaintexts of the bankcard passwords are exposed, and the bankcard passwords are prone to being cracked, resulting in potential safety hazards.

US 2010 131 764 A1 relates to a secured data transfer system and a method. The system and method provide a secure solution that plugs the gaps and ensures a true end-to-end, bank-grade secured transaction exchange between a user/client's mobile device and a back-end host and using caching method for network traffic data reduction techniques.

EP 2 775 421 A1 describes a Point-of-sale (POS) terminal for entering a PIN to enable a financial transaction. The POS comprises a card reader for reading information from a credit card; a processor for running an operation system, with applications; a touch screen for displaying information an receiving user inputs; and a security-box which is connected between the touch screen and the processor.

US 2010 145 854 A1 relates to systems and or methodologies for enabling a secure environment for trusted and untrusted processes to share the same hardware. A separation component segregates, isolates, or otherwise separates trusted and untrusted processes and/or scripts to ensure that payment card industry and PIN entry device security standards are maintained.

US 2012 143 770 A1 describes a purchase transaction system with encrypted payment card data.

An authenticating remote transaction which uses a mobile device is disclosed in US 2014 164 254 A1.

CN 103 996 011 A discloses a method and device of protecting password input safety.

### Technical Problems

The technical issue to be settled by the invention is to disclose a novel practical bankcard password input protection technique, which achieves safe input and internal transmission of bankcard passwords without affecting user experience of customers through a reasonable scheme design and an encryption protection technique of the bankcard cryptography.

### Solution to the Problems

### Technical Solution

The invention is indicated in the independent claims. Further embodiments are indicated in the dependent claims. The technical scheme adopted by the invention to settle the above technical issue is to provide a bankcard password protection method. The bankcard password protection method comprises the following steps:

A security processor randomly generates a public and private key pair;

The security processor sends a public key to an application processor;

The application processor acquires a bankcard password, encrypts the bankcard password by means of the public key and then transmits the encrypted bankcard password to the security processor;

The security processor decrypts the bankcard password by means of the private key.

To settle the above technical issue, the invention further provides a bankcard password protection system. The bankcard password protection system comprises an application processor and a security processor, wherein:

The security processor is used for randomly generating a public and private key pair and sending a public key to the application processor;

The application processor acquires a bankcard password, encrypts the bankcard password by means of the public key and then transmits the encrypted bankcard password to the security processor;

The security processor decrypts the bankcard password by means of the private key. Beneficial Effects of the Invention

### Beneficial Effects

The invention has the following beneficial effects: different from the prior art, the security processor of the invention randomly generates a public and private key pair and sends a public key to the application processor to encrypt a bankcard password, the encrypted bankcard password is then sent to the security processor to be decrypted by means of a private key, and thus, the plaintext of the bankcard password is prevented from being exposed in the transmission process from the application processor to the security processor. In this way, the invention improves the security of the input and transmission process of the bankcard password and brings a better experience feeling to customers.

### Brief Description of Drawings

### Description of Drawings

FIG. 1 is a flow diagram of the method in the first embodiment of the invention;
FIG. 2 is a physical component diagram of a smart POS device in the specific embodiment of the invention;
FIG. 3 is a diagram of the PIN input and encryption protection process during a transaction in the specific embodiment of the invention;
FIG. 4 is a first disorganized display diagram of a touch-screen numeric keypad in the specific embodiment of the invention;
FIG. 5 is a second disorganized display diagram of the touch-screen numeric keypad in the specific embodiment of the invention;
FIG. 6 is a third disorganized display diagram of the touch-screen numeric keypad in the specific embodiment of the invention.

### Embodiments of the Invention

### Detailed Description of the Invention

The key conception of the invention lies in that a public and private key pair is generated in a security processor and a bankcard password input by customers is encrypted in an application processor and then transmitted to the security processor so as to be decrypted, thus preventing the plaintext of the bankcard password from being exposed in the transmission process.

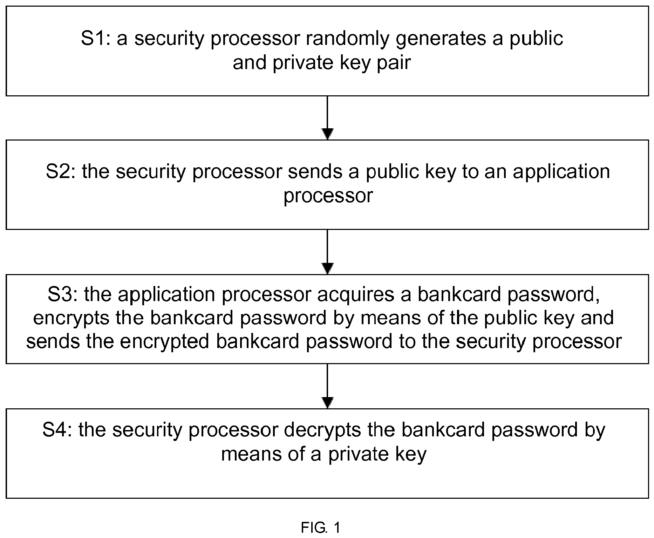

As is shown in FIG. 1, the first embodiment of the invention provides a bankcard password protection method. The bankcard password protection method comprises the following steps:
S1: a security processor randomly generates a public and private key pair;
S2: the security processor sends a public key to an application processor;
S3: the application processor acquires a bankcard password, encrypts the bankcard password by means of the public key and then sends the encrypted bankcard password to the security processor;
S4: the security processor decrypts the bankcard password by means of a private key.

The first embodiment of the invention differs from the prior art in that the security processor randomly generates the public and private key pair and sends the public key to the application processor to encrypt the bankcard password and the encrypted bankcard password is then sent to the security processor to be decrypted by means of the private key, thus improving the security of the input process of the bankcard password and bringing a better experience feeling to customers.

Wherein, the security processor encrypts a bankcard password plaintext obtained through decryption by means of a key to obtain a PIN block in a ciphertext format and then sends the PIN block in the ciphertext format to the application processor; and the application processor sends the PIN block in the ciphertext format as well as transaction data to a background to complete verification.

In addition, the key used to form the PIN block in the ciphertext format through encryption is prestored in the security processor and used for transaction verification with the background. That is, the key is irrelevant to the public and private key pair generated in Step S1.

The application processor displays a random disorganized numeric keypad on a touch screen, and the bankcard password is input through the random disorganized numeric keypad.

Specifically, when PIN is input to the touch screen of the AP, a random disorganized numeric keypad will be displayed on a LCD screen to remind the cardholder to input the PIN. Every time the numeric keypad is displayed on the LCD screen, a drive or service related to PIN input of the touch screen will read a set of random numbers from the system, and then a numeric keypad with disorganized numbers is shown on the LCD screen according to the random numbers, thus making sure that the prompt and input positions of PIN numbers on the LCD screen are random and uncertain every time the PIN numbers are input and accordingly preventing attackers from figuring out the input PIN numbers according to fixed positions.

When the bankcard password is input to the touch screen of the application processor, the system setting enters into a special bankcard password input mode, and all bankcard password input events are only available to a creditable touch screen bankcard password drive so as to be processed.

Specifically, when PIN is input to the touch screen of the AP, the system setting will enter into a special PIN input mode, and in this mode, a special touch screen PIN drive will intercept PIN input events on the hardware level to make sure that all the PIN input events are only available to the creditable touch screen PIN drive to be processed and will not be reported to common application programs, and thus it is ensured that PIN-related information cannot be monitored by illegal application programs. The touch screen PIN input is based on a system-level drive with the legality and integrity protected through the digital signature technique, and the drive cannot be tampered or replaced by common applications.

Specifically, in actual application, the bankcard password protection method of the invention can be applied to a smart POS device to provide protection for safe input and transmission of PIN or to provide security guarantees for PIN input, completely based on a touch screen, of the smart POS device. By implementing the invention, the problems of small available space, difficult appearance and structure design, unattractive overall appearance and inconvenient use caused by the dependence on physical keypads of traditional POS devices can be solved, a better user experience of PIN input of the smart POS device is achieved, and the security of the PIN input process is sufficiently ensured.

The bankcard password protection method is suitable for all POS terminal devices supporting the bankcard payment function and realizing PIN input through a touch screen. These POS terminal devices generally comprise a universal application processor subsystem and a professional security processor subsystem, the touch screen is controlled by the AP subsystem, and PIN is input to an AP and then sent to an SE to be encrypted.

According to the invention, PIN is encrypted when transmitted from the AP to the SE. In the encryption process, the PIN is encrypted by the AP by means of the public key and decrypted by the SE by means of the private key. Since the public key is open, no great risk will be caused even if the public key is stored on the AP system as long as necessary tamper-proof permission protection is set for the AP. The private key needs to be confidentially protected and thus has to be stored on the SE to be prevented against leakage. The PIN is encrypted when transmitted between the AP and the SE, and thus, the security of the transmission process is ensured, and attackers cannot obtain the PIN content in a plaintext format even if breaking through the circuit between the AP and the SE.

The public and private key pair adopted by each smart POS device is randomly generated in the smart POS device, and thus, the key of each smart POS device is unpredictable and is unique in probability, meeting the requirement for one key for each device.

The public and private key pair can be easily generated in the POS device every time the security area is formatted before the POS terminal device leaves the factory, and does not to be input through a complex method. The key pair can be used all the time as long as the POS device is not disassembled or physically attacked in various forms. If the POS device is illegally disassembled, the POS machine will be returned to the factory to be maintained according to the management requirements, in this case, the security area is re-formatted, and thus a new public and private key pair is generated.

Thus, the novel practical PIN input protection technique provided by the invention can achieve safe input and internal transmission of PIN without affecting the user experiment of customers through a reasonable scheme design and an encryption protection technique of the bankcard cryptography.

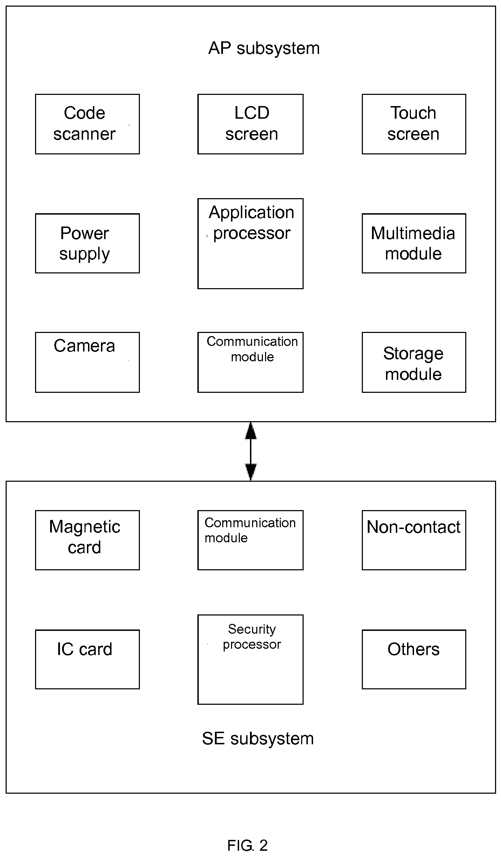

As is shown in FIG. 2, in a specific embodiment, the smart POS device is physically composed of an AP subsystem and an SE subsystem. The AP subsystem comprises an application processor, a LCD screen, a touch screen, a code scanner, a power supply, a camera, a communication module, a storage module, a multimedia module and other hardware device modules. The SE subsystem mainly comprises a security processor, a magnetic card, an IC card, a radio frequency card, a printing module (optional), a communication module and the like.

As for each PIN input process, the cardholder inputs PIN through the touch screen, afterwards, the PIN is encrypted by the application processor (AP) by means of a public key and then transmitted to the communication module of the security processor (SE) from the communication module of the AP so as to be decrypted, and the PIN is encrypted by means of a key, then returned to the AP through the communication module of the SE and the communication module of the AP, and finally output to the POS background.

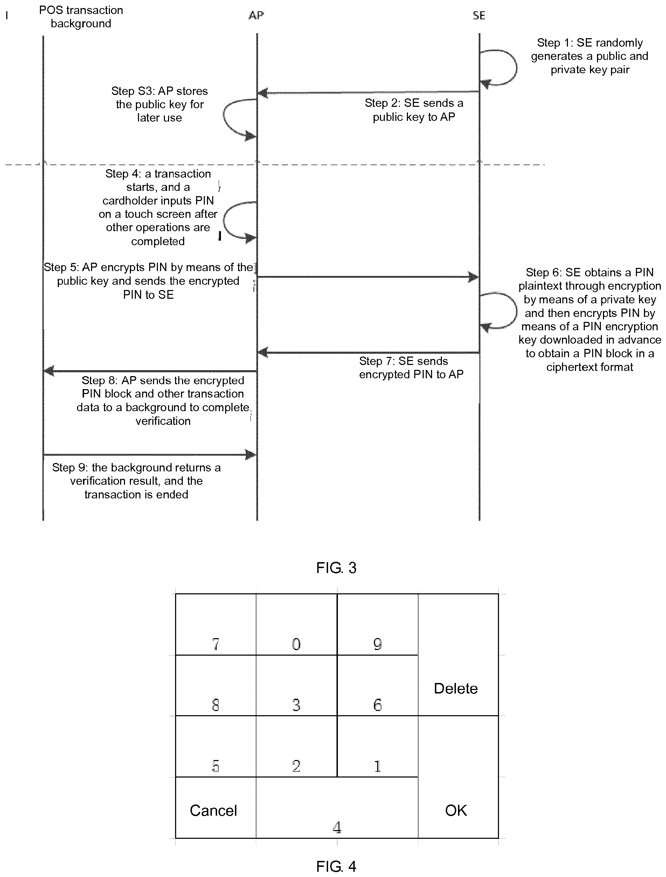

In this specific embodiment, FIG. 3 shows the PIN input and encryption protection steps and flow during one transaction. The description is as follows:
Steps 1-3 are performed in the POS initialization stage, completed in a controlled area of a POS factory, and described as follows:
Step 1: the SE randomly generates a public and private key pair (including a public key and a private key) used as PIN encryption protection keys.
Step 2: the SE sends the public key in the public and private key pair to the AP.
Step 3: the AP stores the public key for encrypted PIN transmission during a subsequent transaction.

Steps 4-9 are to be performed during each normal transaction of the POS device and are described as follows:
Step 4: during each transaction of the POS device, after completing amount input and other operations, the shop assistant hands the POS device to the cardholder for PIN input, and the cardholder inputs the PIN to the POS device.
Step 5: the AP acquires a PIN plaintext first, encrypts the PIN plaintext by means of the public key stored in Step 3 and then sends the encrypted PIN plaintext to the SE.
Step 6: after receiving data sent from the AP, the SE decrypts the data by means of the private key first to acquire the PIN plaintext and then encrypts the PIN plaintext again by means of a PIN encryption key downloaded into the SE (the PIN encryption key is a symmetric key and is downloaded before the POS device is deployed by an acquirer), so that a PIN block in a ciphertext format is obtained.
Step 7: the SE returns the PIN block in the ciphertext format to the AP.
Step 8: the AP integrates the PIN block in the ciphertext format and other transaction data to form a POS transaction message and transmits the POS transaction message to the POS transaction background.
Step 9: the POS transaction background processes relevant data and then conducts comparison (including comparison of PIN and other transaction data); if the comparison succeeds, the transaction succeeds; otherwise, the transaction fails; and the transaction verification result is sent to the POS device.

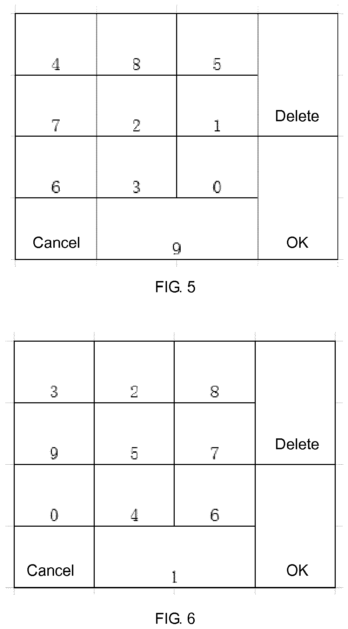

FIG. 4, FIG. 5 and FIG. 6 show disorganized display diagrams of a numeric keypad for PIN input on the touch screen during one transaction. As is shown in the figures, every time PIN is input, the numbers in the numeric keypad displayed on the touch screen are random and disorganized, the positions of the numbers are not fixed, and thus attackers cannot figure out input PIN numbers according to the positions of the PIN numbers.

Furthermore, the second embodiment of the invention correspondingly provides a bankcard password protection system (not shown in the figures). The bankcard password protection system comprises an application processor and a security processor, wherein:

The security processor is used for randomly generating a public and private key pair and sending a public key to the application processor;

The application processor acquires a bankcard password, encrypts the bankcard password by means of the public key and then transmits the encrypted bankcard password to the security processor;

The security processor decrypts the bankcard password by means of a private key.

The security processor encrypts a bankcard password plaintext obtained through decryption to obtain a PIN block in a ciphertext format and sends the PIN block in the ciphertext format to the application processor;

The application processor sends the PIN block in the ciphertext format as well as transaction data to a background to complete verification.

A key used to form the PIN block in the ciphertext format through encryption is prestored in the security processor and used for transaction verification with the background.

The application processor displays a random disorganized numeric keypad on a touch screen, and the bankcard password is input through the random disorganized numeric keypad.

When the bankcard password is input to the touch screen of the application processor, the system setting enters into a special bankcard password input mode, and all bankcard password input events are only available to a creditable touch screen bankcard password drive so as to be processed.

## Claims

1. A bankcard password protection method for a point-of-sale, POS, device comprising an application processor (AP) and a security processor (SE), comprising the steps:
randomly generating a public and private key pair, by the security processor (SE);
sending the public key to the application processor (AP), by the security processor (SE);
acquiring a numerical bankcard password as a personal identification number, PIN, encrypting the bankcard password by means of the public key and transmitting the encrypted bankcard password to the security processor (SE), by the application processor (AP); and
decrypting the bankcard password by means of the private key, by the security processor (SE), further comprising the steps:
displaying a random disorganized numeric keypad, used for bankcard password input for acquiring the bankcard password from a customer, on a touch screen of the application processor (AP), wherein every time the numeric keypad is displayed on the touch screen, a drive or service related to bankcard password input of the touch screen will display the numeric keypad according to a set of random numbers; and
configuring a system setting to a special mode for entering the bank card password when the bankcard password is input to the touch screen of the application processor (AP), wherein in the special mode a special touch screen password drive will intercept password input events on the hardware level to make sure that all password input events are only available to the special touch screen password drive to be processed and will not be reported to common application programs.

2. The bankcard password protection method according to Claim 1, **characterized by** further comprising the steps:
encrypting a bankcard password plaintext obtained through decryption to form a PIN block in a ciphertext format and sending the PIN block in the ciphertext format to the application processor (AP), by the security processor (SE); and
sending the PIN block in the ciphertext format as well as transaction data to a background to complete verification, by the application processor (AP).

3. The bankcard password protection method according to Claim 2, wherein a key used to form the PIN block in the ciphertext format through encryption is prestored in the security processor (SE) and used for transaction verification with the background.

4. A bankcard password protection system, comprising an application processor (AP) and a security processor (SE) in a point-of-sale, POS, device, wherein,
the security processor (SE) is used for randomly generating a public and private key pair and sending the public key to the application processor (AP); the application processor (AP) acquires a numerical bankcard password as a personal identification number, PIN, encrypts the bankcard password by means of the public key and then transmits the encrypted bankcard password to the security processor (SE);
the security processor (SE) decrypts the bankcard password by means of the private key;
the application processor (AP) displays a random disorganized numeric keypad, used for bankcard password input for acquiring the bankcard password from a customer, on a touch screen;
wherein every time the random disorganized numeric keypad is displayed on the touch screen, a drive or service related to bankcard password input of the touch screen will display a numeric keypad with disorganized numbers on the touch screen according to random numbers; and
wherein, when the bankcard password is input to the touch screen of the application processor (AP), a system setting enters into a special bankcard password input mode in which a special touch screen password drive will intercept password input events on the hardware level to make sure that all password input events are only available to the special touch screen password drive to be processed and will not be reported to common application programs.

5. The bankcard password protection system according to Claim 4, wherein, the security processor (SE) encrypts a bankcard password plaintext obtained through decryption to obtain a PIN block in a ciphertext format and sends the PIN block in the ciphertext format to the application processor (AP);
the application processor (AP) sends the PIN block in the ciphertext format as well as transaction data to a background to complete verification.

6. The bankcard password protection system according to Claim 5, wherein a key used to form the PIN block in the ciphertext format through encryption is prestored in the security processor (SE) and used for transaction verification with the background.

## Patentansprüche

1. Verfahren zum Schutz von Bankkarten-Passwörtern für eine Point-of-Sale-, POS-, Vorrichtung, die einen Anwendungsprozessor (AP) und einen Sicherheitsprozessor (SE) aufweist, mit den Schritten:
zufälliges Erzeugen eines öffentlichen und privaten Schlüsselpaares durch den Sicherheitsprozessor (SE);
Senden des öffentlichen Schlüssels an den Anwendungsprozessor (AP) durch den Sicherheitsprozessor (SE);
Erfassen eines numerischen Bankkarten-Passworts als persönliche Identifikationsnummer, PIN, Verschlüsseln des Bankkarten-Passworts mittels des öffentlichen Schlüssels und Übertragen des verschlüsselten Bankkarten-Passworts an den Sicherheitsprozessor (SE) durch den Anwendungsprozessor (AP); und
Entschlüsseln des Bankkarten-Passworts mittels des privaten Schlüssels durch den Sicherheitsprozessor (SE), was ferner die folgenden Schritte umfasst:
Anzeigen eines zufälligen, ungeordneten numerischen Tastenfelds, das für die Bankkarten-Passworteingabe zum Erfassen des Bankkarten-Passworts von einem Kunden verwendet wird, auf einem Berührungsbildschirm des Anwendungsprozessors (AP), wobei jedes Mal, wenn das numerische Tastenfeld auf dem Berührungsbildschirm angezeigt wird, ein Laufwerk oder ein Dienst, das bzw. der mit der Bankkarten-Passworteingabe des Berührungsbildschirms zusammenhängt, das numerische Tastenfeld gemäß einem Satz von Zufallszahlen anzeigt; und
Konfigurieren einer Systemeinstellung auf einen speziellen Modus zum Eingeben des Bankkarten-Passworts, wenn das Bankkarten-Passwort auf dem Berührungsbildschirm des Anwendungsprozessors (AP) eingegeben wird, wobei in dem speziellen Modus ein spezielles Berührungsbildschirm-Passwortlaufwerk Passworteingabeereignisse auf der Hardwareebene abfängt, um sicherzustellen, dass alle Passworteingabeereignisse nur dem speziellen Berührungsbildschirm-Passwortlaufwerk zur Verarbeitung zur Verfügung stehen und nicht an gewöhnliche Anwendungsprogramme gemeldet werden.

2. Verfahren zum Schutz von Bankkarten-Passwörtern nach Anspruch 1, **dadurch gekennzeichnet, dass** es ferner die folgenden Schritte umfasst:
Verschlüsseln eines durch Entschlüsselung erhaltenen Bankkarten-Passwort-Klartextes, um einen PIN-Block in einem Chiffretext-Format zu bilden, und Senden des PIN-Blocks in dem Chiffretext-Format an den Anwendungsprozessor (AP) durch den Sicherheitsprozessor (SE); und
Senden des PIN-Blocks im Chiffretext-Format sowie der Transaktionsdaten an einen Hintergrund, um die Verifizierung abzuschließen, durch den Anwendungsprozessor (AP).

3. Verfahren zum Schutz von Bankkartenpasswörtern nach Anspruch 2, wobei ein Schlüssel, der zur Bildung des PIN-Blocks im Chiffretext-Format durch Verschlüsselung verwendet wird, im Sicherheitsprozessor (SE) vorgespeichert und zur Transaktionsverifizierung mit dem Hintergrund verwendet wird.

4. Bankkarten-Passwortschutzsystem, das einen Anwendungsprozessor (AP) und einen Sicherheitsprozessor (SE) in einer Point-of-Sale-, POS-, Vorrichtung aufweist, wobei
der Sicherheitsprozessor (SE) zum zufälligen Erzeugen eines öffentlichen und privaten Schlüsselpaares und zum Senden des öffentlichen Schlüssels an den Anwendungsprozessor (AP) verwendet wird;
der Anwendungsprozessor (AP) ein numerisches Bankkarten-Passwort als persönliche Identifikationsnummer (PIN) erfasst, das Bankkarten-Passwort mit Hilfe des öffentlichen Schlüssels verschlüsselt und dann das verschlüsselte Bankkarten-Passwort an den Sicherheitsprozessor (SE) überträgt;
der Sicherheitsprozessor (SE) das Bankkartenpasswort mittels des privaten Schlüssels entschlüsselt;
der Anwendungsprozessor (AP) auf einem Berührungsbildschirm ein zufällig ungeordnetes numerisches Tastenfeld anzeigt, das für die Eingabe des Bankkarten-Passworts verwendet wird, um das Bankkarten-Passwort von einem Kunden zu erhalten;
wobei jedes Mal, wenn das zufällige unorganisierte numerische Tastenfeld auf dem Berührungsbildschirm angezeigt wird, ein Laufwerk oder ein Dienst, das bzw. der mit der Bankkarten-Passworteingabe des Berührungsbildschirms zusammenhängt, ein numerisches Tastenfeld mit unorganisierten Zahlen auf dem Berührungsbildschirm gemäß Zufallszahlen anzeigt; und
wobei, wenn das Bankkarten-Passwort auf dem Berührungsbildschirm des Anwendungsprozessors (AP) eingegeben wird, eine Systemeinstellung in einen speziellen Bankkarten-Passworteingabemodus eintritt, in dem ein spezielles Berührungsbildschirm-Passwortlaufwerk Passworteingabeereignisse auf der Hardwareebene abfängt, um sicherzustellen, dass alle Passworteingabeereignisse nur dem speziellen Berührungsbildschirm-Passwortlaufwerk zur Verarbeitung zur Verfügung stehen und nicht an gewöhnliche Anwendungsprogramme gemeldet werden.

5. Bankkarten-Passwortschutzsystem nach Anspruch 4, wobei
der Sicherheitsprozessor (SE) einen durch Entschlüsselung erhaltenen Bankkarten-Passwort-Klartext verschlüsselt, um einen PIN-Block in einem Chiffretext-Format zu erhalten, und den PIN-Block in dem Chiffretext-Format an den Anwendungsprozessor (AP) sendet; der Anwendungsprozessor (AP) den PIN-Block im Chiffretextformat sowie die Transaktionsdaten an einen Hintergrund sendet, um die Verifizierung abzuschließen.

6. Bankkarten-Passwortschutzsystem nach Anspruch 5, wobei ein Schlüssel, der zur Bildung des PIN-Blocks im Chiffretextformat durch Verschlüsselung verwendet wird, im Sicherheitsprozessor (SE) vorgespeichert und zur Transaktionsverifizierung mit dem Hintergrund verwendet wird.

## Revendications

1. Un procédé de protection d'une carte bancaire par mot de passe pour un dispositif de point de vente, POS, comprenant un processeur d'application (AP) et un processeur de sécurité (SE), comprenant les étapes suivantes :
générer aléatoirement une paire de clés publique et privée, par le processeur de sécurité (SE) ;
envoyer la clé publique au processeur d'application (AP) par le processeur de sécurité (SE) ;
acquérir un mot de passe numérique de carte bancaire en tant que numéro d'identification personnel, PIN, crypter le mot de passe de carte bancaire au moyen de la clé publique et transmettre le mot de passe crypté de carte bancaire au processeur de sécurité (SE), par le processeur d'application (AP) ; et
décrypter le mot de passe de la carte bancaire au moyen de la clé privée, par le processeur de sécurité (SE), comprenant en outre les étapes suivantes :
afficher sur un écran tactile du processeur d'application (AP) un clavier numérique en désordre et aléatoire, utilisé pour la saisie du mot de passe de la carte bancaire en vue d'acquérir auprès d'un client le mot de passe de la carte bancaire, de sorte qu'à chaque fois que le clavier numérique est affiché sur l'écran tactile, un lecteur ou un service lié à la saisie du mot de passe de la carte bancaire de l'écran tactile affichera le clavier numérique en fonction d'un ensemble de nombres aléatoires ; et
configurer un paramètre système en un mode spécial pour la saisie du mot de passe de la carte bancaire lorsque le mot de passe de la carte bancaire est saisi sur l'écran tactile du processeur d'application (AP), un lecteur spécial de mot de passe de l'écran tactile interceptera, dans le mode spécial, les événements de saisie de mot de passe au niveau matériel pour s'assurer que tous les événements de saisie de mot de passe ne sont disponibles que pour le lecteur spécial de mot de passe de l'écran tactile pour être traités et ne seront pas communiqués à des programmes d'application communs.

2. Le procédé de protection de carte bancaire par mot de passe selon la revendication 1, **caractérisée par le fait qu'**il comprend en outre les étapes suivantes :
crypter le texte en clair du mot de passe de la carte bancaire obtenu par décryptage pour former un bloc PIN dans un format de texte crypté et, par le processeur de sécurité (SE), envoyer le bloc PIN dans le format de texte crypté au processeur d'application (AP) ; et
envoyer, par le processeur d'application (AP), le bloc PIN au format de texte crypté ainsi que des données de transaction à un système d'arrière-plan pour achever la vérification.

3. Le procédé de protection de carte bancaire par mot de passe selon la revendication 2, dans lequel une clé utilisée pour former le bloc PIN dans le format de texte crypté par cryptage est pré-enregistrée dans le processeur de sécurité (SE) et est utilisée pour la vérification de la transaction avec le système d'arrière-plan.

4. Un système de protection de carte bancaire par mot de passe, comprenant un processeur d'application (AP) et un processeur de sécurité (SE) dans un dispositif de point de vente, POS,
le processeur de sécurité (SE) étant utilisé pour générer aléatoirement une paire de clés publique et privée et pour envoyer la clé publique au processeur d'application (AP) ;
le processeur d'application (AP) acquiert un mot de passe numérique de carte bancaire en tant que numéro d'identification personnel, PIN, crypte le mot de passe de carte bancaire au moyen de la clé publique et transmet ensuite au processeur de sécurité (SE) le mot de passe crypté de carte bancaire ;
le processeur de sécurité (SE) décrypte le mot de passe de la carte bancaire au moyen de la clé privée ;
le processeur d'application (AP) affiche sur un écran tactile un clavier numérique en désordre et aléatoire, utilisé pour la saisie du mot de passe de la carte bancaire en vue d'acquérir auprès d'un client le mot de passe de la carte bancaire ;
chaque fois que le clavier numérique en désordre et aléatoire est affiché sur l'écran tactile, un lecteur ou un service lié à la saisie du mot de passe de carte bancaire de l'écran tactile affichera un clavier numérique avec des numéros en désordre sur l'écran tactile en fonction de nombres aléatoires ; et
lorsque le mot de passe de la carte bancaire est saisi sur l'écran tactile du processeur d'application (AP), un paramètre du système entre dans un mode spécial de saisie du mot de passe de la carte bancaire dans lequel un lecteur spécial de mot de passe de l'écran tactile interceptera les événements de saisie du mot de passe au niveau du matériel pour s'assurer que tous les événements de saisie du mot de passe sont uniquement disponibles pour le lecteur spécial de mot de passe de l'écran tactile afin d'être traités et qu'ils ne seront pas communiqués à des programmes d'application communs.

5. Le système de protection de carte bancaire par mot de passe selon la revendication 4, dans lequel le processeur de sécurité (SE) crypte le texte en clair du mot de passe de carte bancaire obtenu par décryptage pour obtenir un bloc PIN dans un format de texte crypté et envoie le bloc PIN dans le format de texte crypté au processeur d'application (AP) ;
le processeur d'application (AP) envoie le bloc PIN dans le format de texte crypté ainsi que des données de transaction à un système d'arrière-plan pour terminer la vérification.

6. Le système de protection de carte bancaire par mot de passe selon la revendication 5, dans lequel une clé utilisée pour former le bloc PIN dans le format de texte crypté par cryptage est pré-enregistrée dans le processeur de sécurité (SE) et utilisée pour une vérification de la transaction avec le système d'arrière-plan.
